# EUROPÄISCHE PATENTSCHRIFT

(11) **EP 2 341 761 B1**
(45) Veröffentlichungstag und Bekanntmachung des Hinweises auf die Patenterteilung: **14.12.2022**
(21) Anmeldenummer: 11155583.5
(22) Anmeldetag: 12.06.2008
(51) Int. Cl.: H05B 45/385

(54) **Betriebsgerät zum Betreiben einer Lichtquelle, insbesondere LED**
Apparatus for operating a light source, in particular LED
Appareil pour opérer une source lumineuse, notamment une DEL

(30) Priorität: 15.06.2007 DE 102007027551
(43) Veröffentlichungstag der Anmeldung: 06.07.2011
(62) Teilanmeldung aus: 08773407.5
(73) Patentinhaber: Tridonic GmbH & Co KG, 6851 Dornbirn (AT)
(72) Erfinder: Zudrell-Koch, Stefan, 6845, Hohenems (AT); Barth, Alexander, 6861, Alberschwende (AT)
(74) Vertreter: Rupp, Christian

(56) Entgegenhaltungen:
- EP-A- 1 608 206
- US-A- 4 988 889
- US-A1- 2007 108 956
- US-B1- 6 369 525
- US-B1- 6 504 267
- LASZLO BALOGH ET AL: "Unique Cascaded Power Converter Topology For High Current Low Output Voltage Applications", -, 31 December 2001 (2001-12-31), - 31 December 2001 (2001-12-31),
- SEMTECH: "High Performance Secondary Side Controller with Synchronous Rectifier", WWW.SEMTECH.COM, 1 June 2005 (2005-06-01), - 1 June 2005 (2005-06-01),

## Beschreibung

Die vorliegende Erfindung besieht sich allgemein auf das Gebiet der Betriebegeräte für Leuchtmittel, wie bspw. Gasentladungslampen oder Leuchtdioden (LEDs).

In unterschiedlichen Anwendungsgebieten der Lichttechnik, besonders im Bereich LED, OLED und Notlicht gibt es die Anforderung, eine galvanische Trennung vergleichbar zu elektronischen Transformatoren vorzusehen, so dass dann die Installation nicht mehr zwangsweise durch einen ausgebildeten Fachmann durchgeführt werden muss. Es soll also das Leuchtmittel und/oder die Steuerelektronik auf einem von der Versorgungsnetzspannung galvanisch getrennten Potential arbeiten.

Es ist bereits bekannt, einen zweistufigen Ansatz zu verwenden. Dabei wird ein Wandler (Konverter), der die Leuchtmittel versorgt, unter Potentialtrennung über eine Steuerschaltung auf der Netzspannungsseite (Primärseite der Potentialtrennung) angesteuert. Falls Rückführsignale von der Sekundärseite der Potentialtrennung, also insbesondere aus dem Bereich der Leuchtmittel zu der Steuerschaltung zurückgeführt werden sollen, ist für diese Rückführung ebenfalls eine Potentialtrennung vorgesehen. Die Ansteuerung auf der Sekundärseite der Potentialtrennung erfolgt durch eine weitere Steuerschaltung, die eine von der erstgenannten, auf Netzspannungspotential liegenden Steuerschaltung getrennt ist.

Die Erfindung sieht nunmehr eine verbesserte Technik zur Potentialtrennung in Betriebsgeräten für Leuchtmittel vor.

Diese Aufgabe wird gelöst durch die Merkmale der unabhängigen Ansprüche. Die abhängigen Ansprüche bilden den zentralen Gedanken der Erfindung in besonders vorteilhafter Weise weiter.

Weitere Merkmale, Eigenschaften und Vorteile der Erfindung sollen nunmehr unter Bezugnahme auf die begleitenden Zeichnungen anhand von rein illustrativen Ausführungabeispielen erläutert werden.
- Fig. 1: zeigt eine schematische Ansicht des Betriebsgeräts für Leuchtmittel, insbesondere für LEDs, gemäß der vorliegenden Erfindung,
- Fig. 2: zeigt eine Ausgestaltung, bei der eine erste Potentialtrennungsstufe als Vorwärtswandler (Forward-Konverter) ausgeführt ist, der in einer diskontinuierlichen Betriebsart betrieben ist,
- Fig. 3: zeigt eine Abwandlung von Figur 2 dahingehend, dass der Vorwärtswandler für eine kontinuierliche Betriebsweise ausgelegt ist,
- Fig. 4: zeigt eine Ausführungsform, bei der die erste Potentialtrennungsstufe als Flyback-Konverter ausgebildet ist,
- Fig. 5: zeigt eine Ausführungsform, bei der die zweite Wandlerstufe als Buck-Boost-Konverter ausgebildet ist,
- Fig. 6: zeigt eine Ausgestaltung, bei der die digital integrierte Steuerschaltung vom Netzspannungspotential nicht potentialgetrennt ist und die erste Wandlerstufe als Vorwärtswandler ausgebildet ist,
- Fig. 7: zeigt eine Abwandlung von Figur 6 dahingehend, dass die zweite Wandlerstufe als Buck-Boost-Konverter ausgebildet ist, und
- Fig. 8: zeigt ein Ausführungsbeispiel mit kombinierter erster Wandlerstufe.

Die vorliegende Erfindung beschreibt ein solches System. Eine Leistungswandlerstufe P1 ist mit Wechselspannung versorgt und hat ein Bezugspotential Z1. Die Leistungswandlerstufe P1 wird durch einen Schalter (bspw. Transistor) S1 getaktet.

Eine Steuereinheit C1 (bspw. ein IC wie bspw. ein ASIC, insbesondere als Digitalschaltung ausgebildet) steuert bspw. mittels PWM-Signalen den Schalter S1 über eine galvanische Trennung G2 an. Die vorzugsweise digitale Steuereinheit C1 kann einen internen Treiber aufweisen. Alternativ oder zusätzlich kann auch ein Treiber zwischen der galvanischen Trennung G2 und dem Schalter S1 vorgesehen sein. Ein Treiber für den (bspw. MOSFET-)Schalter S1 kann dabei vor der galvanischen Trennung und/oder nach der galvanischen Trennung G2 vorgesehen sein.

Zu der digitalen Steuereinheit C1 können Rückführungssignale zurückgeführt werden, die als Istwerte zur Regelung des Leuchtmittelbetriebs ausgewertet werden. Die Rückführsignale können dabei aus dem Bereich des Lastkreises L, der das Leuchtmittel (bspw. eine oder mehrere LEDs) aufweist, dem Bereich eines weiteren Schalters S2 (bspw. Schalterstrom bei eingeschaltetem Schalter S2) oder einer von mehreren Leistungswandlerstufen (Konvertern) P1, P2 stammen.

G1 und G2 können Trafos sein. Dabei können die Trafos G1, G2 auf denselben Kern gewickelt sein.

Die digitale Steuereinheit C1 weist auf einen Taktgeber (Clock), einen AD-Wandler (ADC), Referenzspannungen, eine Logikschaltung und PWM (Pulsbreitenmodulation)-Treiber für die Schalter S1 und S2.

Innerhalb der Steuereinheit C1 sind vorzugsweise mehrere Analog/Digital-Wandler ADC für die Rückführsignale sowie zwei digital arbeitende Regelkreise angeordnet. Der erste Regelkreis ist dabei für das Ansteuern des Schalters S1 der Leistungswandlerstufe P1 und der zweite Regelkreis für das Ansteuern des Schalters S2 der Leistungswandlerstufe P2 zuständig. Die beiden digitalen Regelkreise weisen jeweils eine Logikschaltung auf, der wenigstens ein A/Dgewandeltes Signal zugeführt ist, und je einen PWM (Pulsbreitenmodulation)-Treiber auf, ausgehend von dem der jeweils zugeprdnete Schalter angesteuert ist.

Darüber hinaus ist ein Betriebszustands-Steuerblock ("State machine") vorgesehen, der der Logikschaltung der Regelkreise Betriebszustands-Informationen bezüglich der aktuellen Betriebsphase ("state") des Leuchtmittels oder auch des Betriebsgerätes (zum Beispiel wenn ein Notlichtbetrieb vorliegt) übermittelt. Sämtliche Komponenten der Steuereinheit C1 werden über einen zentralen Taktgeber (Clock) synchronisiert, der den Komponenten entsprechende Taktsignale übermittelt. Die Steuereinheit C1 ist vorzugsweise als anwendungsspezifische integrierte Schaltung (Application Specific Integrated Circuit - ASIC) ausgebildet und nimmt dementsprechend nur wenig Platz ein.

Im folgenden soll die Funktionsweise des ersten Regelkreises zur Regelung der Leistungswandlerstufe P1 erläutert werden. Hierzu werden die bereits oben erwähnten Betriebsparameter bzw. Rückführparameter - zum Beispiel die Ausgangsspannung der Leistungswandlerstufe P1 - erfasst und mit Hilfe von Analog/Digital-Wandlern ADC in digitale Werte mit einer Genauigkeit von mindestens 2 bit, vorzugsweise von 12 bit, umgesetzt.

Für diesen ersten Regelkreis ist der von dem ersten Analog/Digital-Wandler ADC erzeugte Digitalwert der Ausgangsspannung der Leistungswandlerstufe P1 von vorrangiger Bedeutung, der zunächst der Logikschaltung (Logic) zugeführt wird. Anhand dieses Wertes berechnet die Logikschaltung (Logic) eine entsprechende Steuerinformation für den Schalter S1 in Form eines Digitalwertes, der in einem Speicher-Register abgelegt wird. Dieser Wert beinhaltet Informationen über die erforderliche Einschaltdauer oder das Tastverhältnis für den Schalter S1.

Dabei erfolgt die Berechnung unter Berücksichtigung des aktuellen Wertes in dem Speicher-Register und der von dem Betriebszustands-Steuerblock übertragenen Betriebszustands-Information. Die Berücksichtigung dieser Betriebszustands-Information gewährleistet, dass die Regeleigenschaften auf den aktuellen Betriebszustand des Leuchtmittels oder auch des Betriebsgerätes abgestimmt werden können, was deswegen von Bedeutung ist, da in unterschiedlichen Betriebsphasen unterschiedliche dynamische Regeleigenschaften gewünscht werden können. So ist es bspw. während des Notlichtbetriebs wünschenswert, möglichst eine energiesparende Betriebsweise zu wählen, um in dieser Phase die vorhandene Batterieladung möglichst effektiv nutzen zu können. Dies kann bspw. durch einen sog. Burst-Betriebsmodus (Ansteuerung in Pulspaketen mit anschließender Pause) erfolgen. während des Normalbetriebs des Betriebsgerätes hingegen sollte eine Regeldynamik vorliegen, bei der in erster Linie auch schnelle Helligkeitsänderungen ermöglicht werden.

Der in dem Speicher-Register abgelegte Wert wird schliesslich von dem PWM (Pulsbreitenmodulation)-Treiber des Regelkreises in eine entsprechende Schaltinformation umgesetzt, die ein dementsprechendes Steuersignal zum Betreiben des Schalters S1 über das Steuersignal st1 über eine galvanische Trennung G2 überträgt.

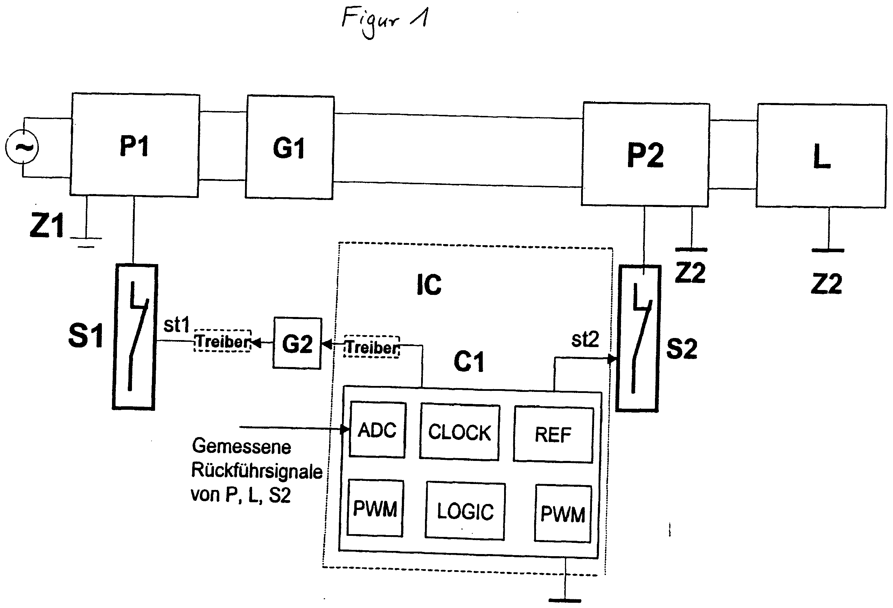

Es ist anzumerken, dass entgegen der schematischen Darstellung in Fig. 1 die Steuereinheit C1 in der Praxis vorzugsweise lediglich einen einzigen Analog/DigitalWandler aufweist, der im Zeitmultiplex betrieben wird und die über die Eingangsleitungen zugeführten Betriebsparameter nacheinander in die benötigten Digitalwerte umsetzt. Auch die Umsetzung der von der Leistungswandlerstufe P2 erfassten Betriebsparameter für die nachfolgend beschriebene Regelung der Leistungswandlerstufe P2 kann durch diesen einzigen Analog/Digital-Wandler erfolgen.

Die Steuerung der Leistungswandlerstufe P2 mit Hilfe des zweiten Regelkreises erfolgt in ähnlicher Weise wie die Regelung der Leistungswandlerstufe P1, wobei der Logikschaltung (Logic) von dem beispielweise im Zeitmultiplex arbeitenden gemeinsam genutzten Analog/Digital-Wandler erzeugte digitale Betriebsparameter zugeführt werden, die Logikschaltung in Abhängigkeit davon eine entsprechende Schaltinformation berechnet und an den PWM (Pulsbreitenmodulations)-Treiber überträgt. Auch hier werden mit Hilfe des Betriebszustands-Steuerblocks in verschiedenen Betriebsphasen des Leuchtmittels oder auch des Betriebsgerätes unterschiedliche Regeleigenschaften realisiert.

Die erste Leistungswandlerstufe P1 ist über eine galvanische Trennung G1 mit einer zweiten Leistungswandlerstufe P2 verbunden, die ein zweites, mit dem ersten Bezugspotential unterschiedliches Bezugspotential Z2 aufweist.

Die Leistungswandlerstufen P1, P2 können als Vorwärtswandler, als Flyback-Konverter oder auch als andere potentialgetrennnte Konverterschaltungen ausgebildet sein.

Ein Schalter S2, der ebenfalls von einer PWM-Einheit der Steuereinheit C1 (ohne Potentialtrennung) angesteuert wird, taktet die zweite Leistungswandlerstufe P2.

Gemäss der Erfindung kann somit eine einzige Schaltung (insbesondere ein einziger IC wie bspw. ein ASIC) sowohl (potentialgetrennt) einen Konverter P1 auf Netzspannungspotential wie auch (ohne galvanische Trennung) den von der Netzspannung galvanisch getrennten Konverter P2 ansteuern.

Die zweite Leistungswandlerstufe P2 versorgt einen Last kreis, der das Leuchtmittel L aufweist oder nur aus diesem besteht und der dasselbe Bezugspotential wie die zweite Leistungswandlerstufe P2 aufweist.

Die Erfindung sieht also ein Betriebsgerät zum Betreiben einer Lichtquelle, insbesondere einer LED, vor. Das Betriebsgerät kann aufweisen:
- Eine erste Leistungswandlerstufe P1 mit Bezugspotential Z1,
- Zumindest einen Leistungsschalter S1 der die Wandlerstufe P1 taktet,
- Eine digitale Steuereinheit C1 bestehend aus einem Taktgeber ("Clock"), einem AD-Wandler (ADC), Referenzspannungen, einer Logikschaltung und einem PWM (Pulsbreitenmodulation)-Treiber,
- Eine galvanische Entkopplung G1,
- Eine zweite Leistungswandlerstufe P2 mit Bezugspotential Z2,
- Zumindest einen Leistungsschalter S2 der die Wandlerstufe P2 taktet,
- Eine Lichtquelle L mit Bezugspotential Z2, wobei die Lichtquelle von der Wandlerstufe P2 mit Energie versorgt wird,
- Das Steuersignal st1 des ersten Schalters S1 ist über eine galvanische Trennung G2 mit der Steuereinheit C1 verbunden.

Gemäß der Erfindung kann die gesamte Regelung und Ansteuerungslogik auf der Sekundärseite der galvanischen Trennung liegen. Weiterhin kann die gesamte Regelung und Ansteuerungslogik auf der Sekundärseite der galvanischen Trennung in einen IC integriert sein (es kann auch die isolierte Ansteuerung integriert sein, z.B. per integrierter Luftspule oder über eine weitere hochfrequente Übertragungsmöglichkeit).

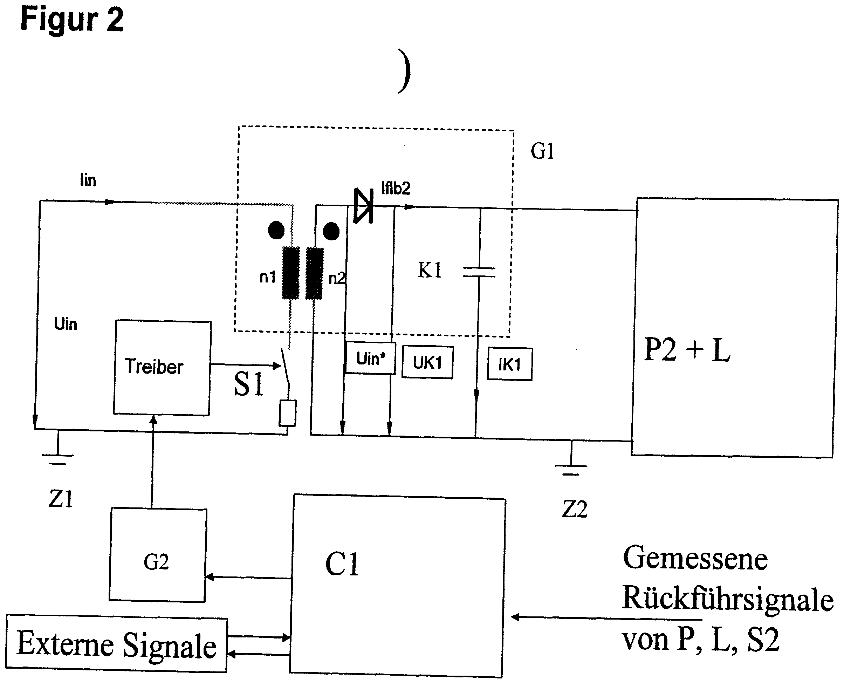

Unter Bezugnahme auf Figur 2 wird nunmehr ein weiteres Ausführungsbeispiel der Erfindung erläutert. Bei diesem Ausführungsbeispiel ist die erste Wandlerstufe P1 und die erste Potentialtrennung G1 integriert ausgeführt. Genauer gesagt, ist in diesem Ausführungsbeispiel als Vorwärtswandler ausgeführt, bei dem also ein Transformator mit Wicklungen N1, N2 primärseitig über den Schalter S1 getaktet ist. Die beiden Wicklungen N1 und N2 sind gleichsinnig gewickelt, so dass die Übertragung von Energie immer dann erfolgt, wenn der Schalter S1 angesteuert durch die digital integrierte Steuereinheit C1 über die Potentialtrennungsstufe G2 eingeschaltet ist. Auf der Primärseite des Vorwärtswandlers, d.h. an der Wicklung N1 liegt also die Netzspannung an, die mit Uᵢₙ bezeichnet ist und ausgangsseitig in eine Spannung Uₒᵤₜ umgewandelt wird. Über eine Diode ist ein Strom I_{FLB2}, der ein Energiespeicherelement K1 auflädt, an dem sich eine Spannung U_{K1} einstellt. Dieses Energiespeicherelement K1 kann beispielsweise einen Kondensator oder eine Batterie sein. Somit stellt sich an dem Energiespeicherelement K1 eine stabilisierte Zwischenspannung U_{K1} ein, ausgehend von der die zweite Wandlerstufe P2 und die Leuchtmittel L gespeist werden können.

Wie in Figur 2 ersichtlich, kann die digital integrierte Steuereinheit C1 dazu ausgebildet sein, externe Signale entgegenzunehmen bzw. beispielsweise über eine angeschlossene Busleitung Signale auszugeben. Bei diesen Signalen kann es sich beispielsweise um Befehle (wie beispielsweise Ein- oder Ausschaltbefehle bzw. Dimmwertvorgaben) oder Statusinformation (insbesondere die Information bzgl. eines Netzspannungsausfalls im Falle der Anwendung der Erfindung auf Notbeleuchtungen) handeln.

Bei der Ausgestaltung von Figur 2 können der digital integrierten Steuereinheit C1 Rückführsignale von der zweiten Wandlerstufe P2, von den Leuchtmitteln L oder vom Schalter S2 des zweiten Wandlers P2 zurückgeführt werden. Dies kann ohne Potentialtrennung erfolgen, da ja die digital integrierte Steuereinheit C1 gemäß dem Ausführungsbeispiel von Figur 2 bzgl. der Netzspannungsseite über das Potentialtrennungselement G2 abgekoppelt ist.

Der resonant diskontinuierliche Betrieb des Vorwärtswandlers ermöglicht eine erhebliche Reduktion der Schaltverluste und somit auch eine Reduktion der benötigten Bauteile. Wenn auf der Primärseite des Vorwärtswandlers parallel oder auch in Serie zu der Spule N1 eine Kapazität K2 angeordnet wird, kann durch entsprechende Wahl der Schaltfrequenz ein Umschwingen zwischen der Spule N1 und der Kapazität K2 erreicht werden. Wenn dieses Umschwingen im Bereich der Schaltfrequenz der Ansteuerung des Schalters S1 liegt, dann kann dieser immer dann eingeschaltet werden, wenn gerade die Spannung über dem Schalter S1 einen geringen Wert hat. Dann ist im Moment des Einschaltens die Verlustleistung aufgrund des Schaltens minimiert. Durch entsprechende Auslegung der Spule N1 und der Kapazität K2 kann die Schaltfrequenz so gewählt werden, dass bei Betrieb des Vorwärtswandlers mit Nennleistung ein solcher resonanter und damit verlustoptimierter Betrieb erreicht werden kann.

Ein der Kapazität K2 entsprechendes Resonanzelement, welches einen resonanten Betrieb durch Ausnutzung eines Resonanzkreises in Verbindung mit der Spule N1 ermöglicht, kann aber auch auf der Sekundärseite des Vorwärtswandlers angeordnet sein oder auch als parasitäre Kapazität in die Schaltung, beispielsweise in den Transformator, integriert sein.

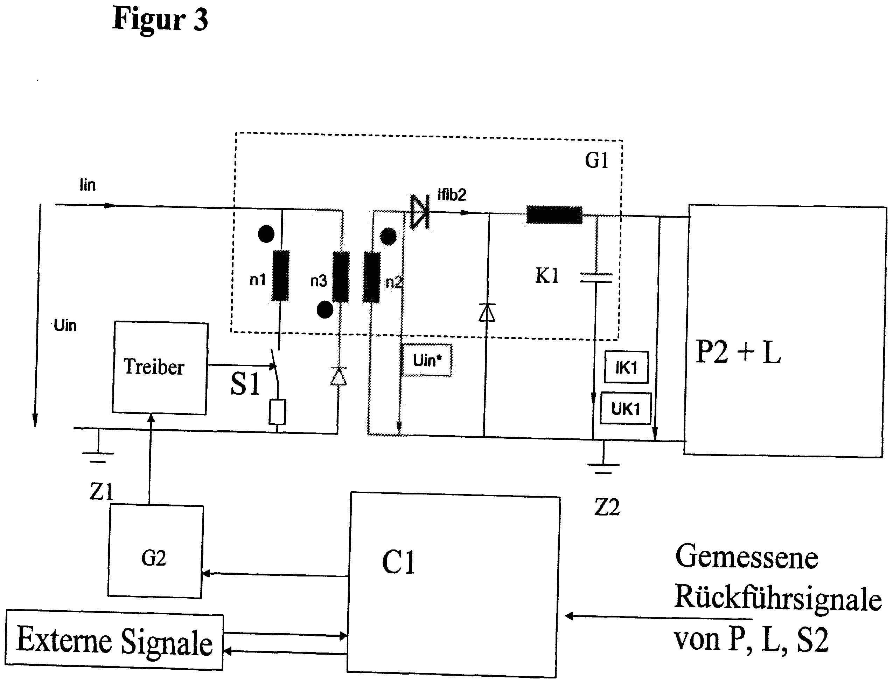

Figur 3 zeigt eine Abwandlung des Ausführungsbeispiels von Figur 2 dahingehend, dass der Vorwärtswandler nunmehr für den kontinuierlichen Betrieb ("continuous mode") ausgelegt ist. Dazu ist im Wesentlichen primärseitig eine dritte Wicklung M3 vorgesehen, zu der in Serie eine Diode geschaltet ist, und wobei die Wicklung der dritten Spule N3 gegensinnig zu den ersten Spulen N1 und N2 ist. Diese Spule N3 dient dazu, die Magnetisierung der primärseitigen Spule N1 abzubauen.

Eine mögliche Erweiterung des Vorwärtswandlers gemäß dem Ausführungsbeispiel nach Fig. 3 ist das Hinzufügen einer Glättungsdrossel nach der Diode, die den Strom I_{FLB2} trägt, sowie einer weiteren Diode, deren Kathode zwischen dieser Diode (D_IFLB2) und der Glättungsdrossel und deren Anode an dem Ende der Spule N2 angeschlossen wird, welches nicht mit der Diode (D_IFLB2) verbunden ist. Durch Hinzufügen dieser beiden Bauelemente kann eine weitere Glättung der Spannung UK1 erreicht werden. Dieses Hinzufügen der beiden Glättungselemente ist im übrigen auch bei allen anderen Ausführungsbeispielen möglich.

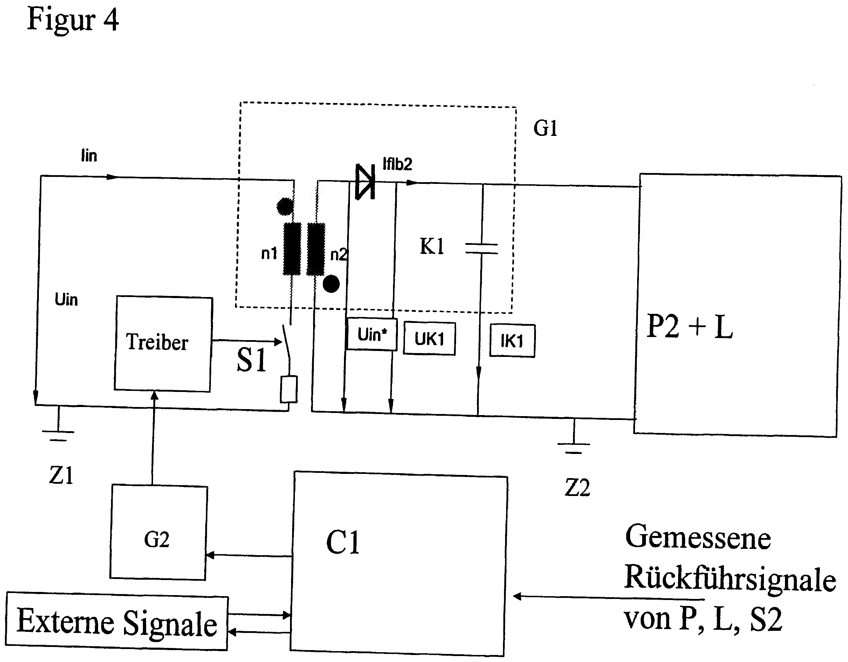

Figur 4 zeigt ein weiteres Ausführungsbeispiel, dass sich von den Ausführungsbeispielen von Figur 2 und Figur 3 dahingehend unterscheidet, dass die erste Wandlerstufe P1 gemeinsam mit der Potentialtrennung G1 als Flyback-Konverter (Sperrwandler) ausgebildet ist. Dabei ist also wiederum ein Transformator mit Wicklungen N1 und N2 vorgesehen, der primärseitig über den Schalter S1 getaktet ist, der wiederum potentialgetrennt durch die Potentialtrennung G2 von der digital integrierten Steuereinheit C1 aus angesteuert ist. Indessen ist bei dem Sperrwandler vorgesehen, dass die Wicklungen N1 und N2 gegensinnig gewickelt sind. Somit überträgt der Flyback-Konverter dann auf die Sekundärseite Energie, wenn der Schalter S1 angesteuert durch die digital integrierte Steuereinheit C1 geöffnet ist.

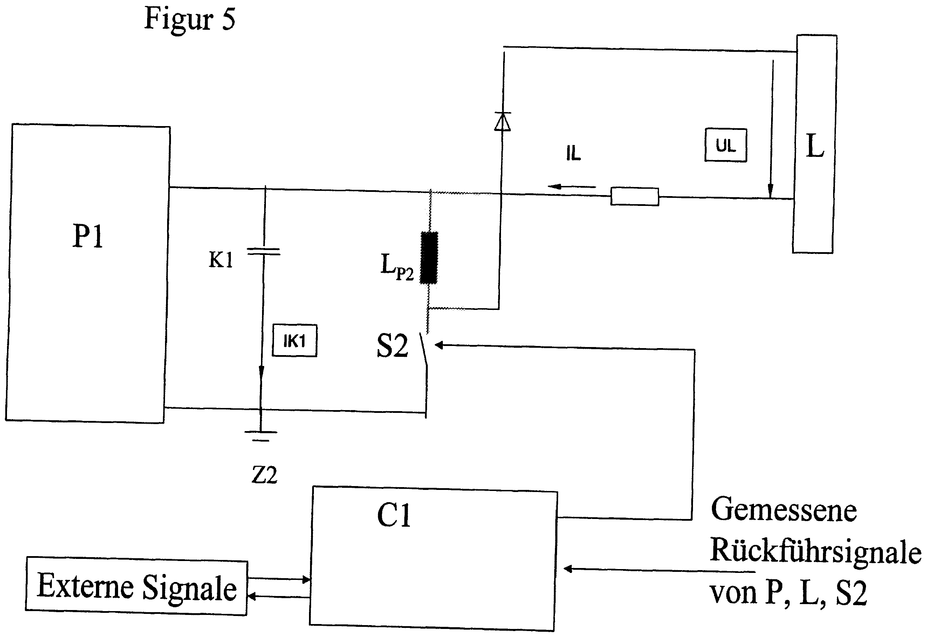

Figur 5 zeigt nunmehr detailliert eine mögliche Ausgestaltung der zweiten Wandlerstufe, wobei sich diese zweite Wandlerstufe P2 gemäß Figur 5 mit jeder der Implementierung der ersten Wandlerstufe P1 mit Potentialtrennung G1 gemäß den Figuren Fig. 2, Fig. 3 oder Fig. 4 kombinieren lässt.

Bei diesem Schaltregler gemäß Figur 5 wird also ein Leuchtmittel L, an dem eine Spannung U_{L} abfällt und durch einen Strom I_{L} durchflossen wird, ausgehend von der stabilisierten Zwischenspannung an dem Energiespeicherelement K1 versorgt.

Ohne Potentialtrennung steuert in diesem Fall die digital integrierte Steuereinheit C1 den Schalter S2 der zweiten Wandlerstufe P2 an, der in Serie zu einer Induktivität L_{P2} geschaltet ist. Durch Wahl der Frequenz und/oder des Tastverhältnisses der Ansteuerung des Schalters S2 lässt sich somit die Spannung an dem Energiespeicherelement K1 in einem verhältnismäßig großen Bereich in eine für den Betrieb der Leuchtmittel L geeignete Spannung herauf- oder herabsetzen.

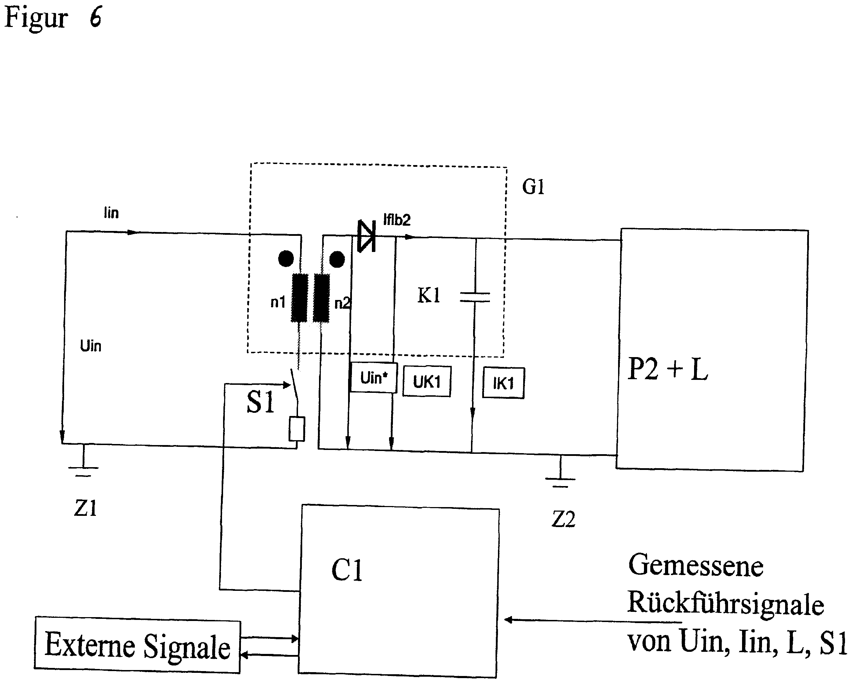

Figur 6 zeigt nunmehr ein Ausführungsbeispiel, das sich von dem Ausführungsbeispiel gemäß der Implementierung von Figur 2 bis Figur 5 grundlegend dahingehend unterscheidet, dass nunmehr die digital integrierte Steuereinheit C1 nicht von der Netzspannungsseite, d.h. in diesem Fall der Primärseite integrierten Potentialtrennung/Wandlerschaltung P/G1 getrennt ist. Ohne die Potentialtrennung steuert also die digital integrierte Steuereinheit C1 die erste Wandlerstufe P1 und genauer gesagt in diesem Beispiel einen Schalter S1 in Serie zu der primärseitigen Wicklung N1 des Vorwärtswandlers an.

Selbstverständlich kann die Ansteuerung ohne Potentialtrennung ausgehend von der digitalen integrierten Steuerschaltung C1 auch zusammen mit einem Sperrwandler wie in Figur 4 gezeigt bzw. einen für die kontinuierliche Betriebsart ausgelegten Vorwärtswandler gemäß Figur 3 verwenden.

Das Ausführungsbeispiel der Fig. 6 eignet sich ebenfalls für einen resonant diskontinuierlichen Betrieb des Vorwärtswandlers. Wenn auf der Primärseite des Vorwärtswandlers parallel oder auch in Serie zu der Spule N1 eine Kapazität K2 angeordnet wird, kann durch entsprechende Wahl der Schaltfrequenz ein Umschwingen zwischen der Spule N1 und der Kapazität K2 erreicht werden.

Die Verwendung der Kapazität K2 kann auch zu einem weiteren Zweck erfolgen. Wenn die Schaltung im nichtkontinuierlichen Modus betrieben wird, so werden Schwingungen in der Umschaltphase wirksam, die durch eine Schwingkreisbildung entstehen. Der Schwingkreis bildet sich durch die Transformator-Induktivitäten sowie Schaltkapazitäten und/oder Streukapazitäten. Um nun möglichst keine Umschaltverluste entstehen zu lassen, soll das Umschalten des elektronischen Schalterelementes genau dann erfolgen, wenn die Schwingungen einen Nulldurchgang haben. Dazu ist es notwendig, die Frequenz dieser Schwingungen zu beeinflussen. Das gelingt durch das Einführen zusätzlicher Kapazitäten, wie beispielsweise der Kapazität K2. Bei entsprechender Bemessung dieser Kapazität K2 erfolgt dann das Umschalten genau im Nulldurchgang oder in der Nähe des Nulldurchganges. Die Spannung über dem Schalter S1 wird gemessen und der Steuerschaltung C1 zugeführt. Durch das Erkennen des Einschaltzeitpunktes ergibt sich die Arbeitsfrequenz. Die Ausgangsspannung (bzw. die übertragene Energie) wird durch das Tastverhältnis des PWM-Schaltsignales bestimmt.

Die Überwachung der Spannung über dem Schalter S1 und des Stromes durch den Schalter S1 kann zur Erkennung genutzt werden, ob ein resonanter Betrieb und somit ein normaler Betriebszustand vorliegt oder aber ein Fehlerfall, beispielweise eine Überlast oder aber ein Fehlen der Last ("no load"). Im Falle eines Fehlers entspricht die angeschlossene Last nicht mehr der Nennleistung. Dies führt dazu, dass die Entmagnetisierung der Spule N1 nicht mehr zum vorgegebenen Zeitpunkt, sondern verfrüht oder aber verzögert bzw. nicht eintritt. Bei Überwachung des Entmagnetisierungszeitpunktes durch Überwachen der Spannung über dem Schalter S1 kann ein solcher Fehlerfall festgestellt werden. Durch die digitale Implementierung der Steuereinheit C1 kann eine diskrete Abtastung (Sampling) der Rückführsignale und somit der Spannung über dem Schalter S1 zu mehreren Zeitpunkten während eines Schaltzykluses erfolgen. Die Rückführparameter können in dem Speicher-Register abgelegt werden und der zeitliche Verlauf für die Erkennung des Vorliegens eines Fehlerfalles durch die Logikschaltung ausgewertet werden. Wie bereits erläutert, bestimmt die Dauer der Einschaltzeit die Höhe der übertragenen Energie und somit die Ausgangsspannung. Durch die zeitliche Abtastung des Stromes durch den Schalter S1 nach dem Einschalten des Schalters S1 kann der Stromverlauf und somit die Aufmagnetisierung der Spule N1 überwacht werden. Die Phasenlage des Stromverlaufs und der Anstieg können über die Logikschaltung ausgewertet werden und spiegeln den Leistungsbedarf des Vorwärtswandlers wieder. Im Falle eines negativen Stromes nach dem Einschalten kann auf den Fall einer Unterlast geschlossen werden, da aufgrund der niedrigen Belastung die Spannung an der Spule N1 beim Wiedereinschalten des Schalters S1 (aufgrund der vorgegebenen Regelschleife) bereits nahe dem negativen Maximum liegt und sich somit ein negativer Wiedereinschaltstrom ergibt. Durch Ablegen der Rückführparameter und Steuerinformationen der Logikschaltung in dem Speicher-Register kann die Logikschaltung auch durch Auswertung des zeitlichen Verlaufes während der vorhergegangenen Schaltzyklen die für die Ansteuerung des Schalters S1 notwendige Einschaltdauer ermitteln und an den PWM (Pulsbreitenmodulation)-Treiber übertragen.

Durch eine entsprechende Wahl der Einschaltzeitdauer des Schalters S1 und Platzierung einer Kapazität K2 als Resonanzelement kann der Vorwärtswandler auch die Funktion einer aktiven (d.h. mit einem angesteuerten Schalter versehenen) Leistungsfaktorkorrekturschaltung (PFC) übernehmen. Diese Funktion der Leistungsfaktorkorrekturschaltung (PFC) kann beispielweise durch einen diskontinuierlichen Betrieb des Vorwärtswandlers bei einem sehr geringem Einschaltverhältnis oder aber auch durch einen kontinuierlichen Betrieb des Vorwärtswandlers bei Platzierung der Kapazität K2 auf der Sekundärseite parallel zur sekundärseitigen Diode (Freilaufdiode) erreicht werden. Wenn die Steuereinheit C1 die Eingangsspannung Uᵢₙ als Rückführungssignal erfasst, kann das Einschaltverhältnis bzw. die Einschaltdauer des Schalters S1 so gesteuert werden, dass der durch die Spule N1 aufgenommene Strom im Mittel dem Verlauf der sinusförmigen Eingangsspannung Uᵢₙ folgt.

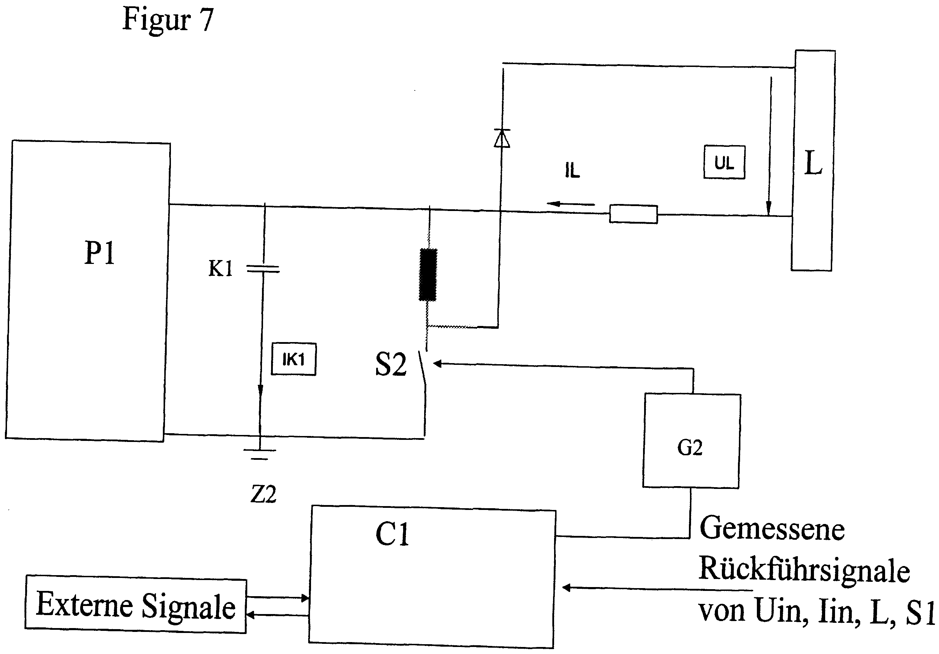

Falls also wie in Figur 6 gezeigt, die digital integrierte Steuereinheit C1 primärseitig nicht von der Netzspannung potentialgetrennt ist, wird vorzugsweise wie in Figur 7 gezeigt, die Ansteuerung der zweiten Wandlerstufe P2, und in dem dargestellten Fall des Schalters S2 der zweiten Potentialwandlerstufe P2 ausgehend von der digital integrierten Steuerschaltung C1 über ein Potentialtrennungselement G2 ausgeführt.

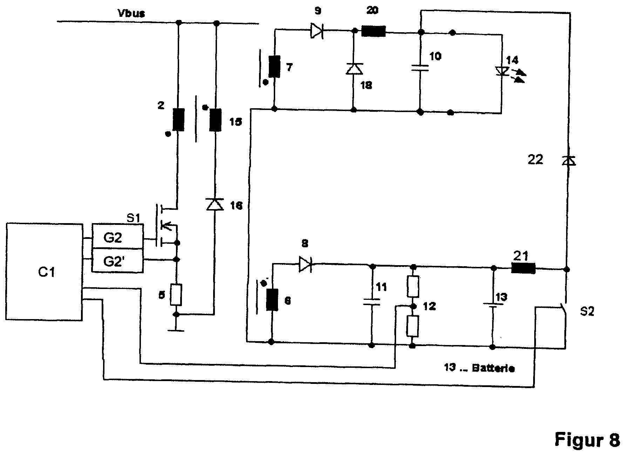

Bei der Ausführungsform von Figur 8 ist ein Flyback-Konverter mit Wicklungen 2, 6 zum Laden einer Batterie 13 mit einem Vorwärts-Wandler (Wicklungen 2, 7) zum Betreiben einer LED 14 gekoppelt. Weiterhin kann die LED 14 auch über eine zweite Schaltstufe (mittels des Schalters S2) ausgehend von der Batterie 13 betrieben werden, wenn keine Netzspannung anliegt.

Die primärseitige Schaltstufe P1 wird durch die Primärwicklung 2 und die Freilaufwicklung 15 mit der Freilaufdiode 16 sowie den optionalen Stromshunt 5 gebildet. Durch den Schalter S1 wird die Energieaufnahme durch P1 gesteuert. Der Schalter S1 wird über ein potentialtrennendes Glied G2 durch den IC C1 angesteuert. Der optionalen Stromshunt 5 kann entweder über einen potentialgetrennten Pfad G2' ein Rückführ- oder Fehlersignal an den IC C1 übertragen oder aber direkt über eine direkte Abschaltung den Schalter S1 im Fehlerfall deaktivieren.

Der Transformator mit seiner Primärwicklung 2, der Freilaufwicklung 15 und den Sekundärwicklungen 6 und 7 bildet das potentialtrennende Glied G1.

Die Kondensatoren 10 und 11 und die wiederaufladbare Batterie 13 bilden den Energiespeicher K1.

Die Schaltstufe P2 wird aus den Sekundärseiten 6, 7 des Trafos sowie dem der wiederaufladbaren Batterie 13 nachfolgenden Buck-Boost Konverter mit dem Schalter S2 gebildet. Die Schaltstufe P2 kann aber auch durch beispielsweise einen Buck-Konverter oder aber durch einen Boost-Konverter gebildet werden.

Der der wiederaufladbaren Batterie 13 nachfolgende Buck-Boost Konverter wird durch den Schalter S2 angesteuert und durch die Drossel 21 und die Freilaufdiode 22 gebildet. Wenn der Schalter S2 eingeschaltet wird, wird die Drossel 21 aufmagnetisiert. Wird der Schalter S2 geöffnet, treibt die Drossel 21 den Strom durch die Diode 22, die LED 14 über den Rücklaufpfad (über 6 und 8) weiter. Aufgrund der Ladung des Kondensators 10 und der Spannungsverhältnisse kann auch während der Aufladephase (S2 eingeschaltet) ein Strom durch die LED 14 fliessen.

Die Ladeschaltung für die wiederaufladbare Batterie 13 wird durch die Sekundärseite 6 und die Diode 8 sowie einen Glättungskondensator 11 gebildet. Anhand des Spannungsteilers 12 kann der IC C1 auf die Ladespannung und auch auf die Spannung an der Primärseite des Trafos und somit auf die Netzspannung schließen.

Die LED-Betriebsschaltung für den Netzbetrieb wird durch durch die Sekundärseite 7 und die Diode 9 und 18 eine Glättungsdrossel 20 sowie einen Glättungskondensator 10 gebildet, welche die Sekundärseite eines Vorwärts-Wandlers bilden.

Es ist möglich, die Spule 20 auf den gemeinsamen Kern des Transformators des kombinierten Vorwärts- und Flyback-Konverters anzuordnen. Da ein Notlichtbetrieb nur in dem Fall erforderlich ist, wenn keine Netzspannung anliegt, kann es bei Betrieb der Spule 20 im Notlichtbetrieb zu keiner Beeinflussung des Flyback- oder Vorwärtskonverters kommen. Durch entsprechende Anordnung der Wicklungen auf unterschiedlichen Kernschenkeln des gemeinsam genutzten Ferritkerns kann weiterhin eine Beeinflussung der Wicklungen untereinander auf ein Minimum reduziert werden.

Dabei können die einzelnen Wicklungen so auf dem gemeinsamen Kern angeordnet sein, dass die Transformatorwicklungen 2, 7, 6 gegen die Drosselwicklung 21 entkoppelt sind und umgekehrt. Die Transformatorwicklungen 2, 7, 6 und die Drosselwicklung 21 können so auf dem gemeinsamen Kern angebracht und verteilt angeordnet sind, dass die von der Drosselwicklung 21 erzeugten magnetischen Flüsse gegensinnige Ströme in den Transformatorwicklungen 2, 7, 6 induzieren, und dass von den Transformatorwicklungen 2, 7, 6 erzeugte magnetische Flüsse so verlaufen, dass sie an der Drosselwicklung vorbeilaufen und keinen Strom darin induzieren. Beispielsweise kann als Bauform ein sog. E-Kern verwendet werden. Der gemeinsame Kern kann aus zwei äußeren und einem mittleren Schenkel sowie diese drei Schenkel an beiden Enden überbrückenden Jochteilen bestehen, dass die Drosselwicklung 21 hälftig und gleichsinnig gewickelt auf verschiedenen Schenkeln des gemeinsamen Kernes verteilt angeordnet sind, dass die Transformatorwicklungen 2, 7, 6 auf dem dritten Kern
angeordnet sind, und dass der dritte Schenkel mit einem Luftspalt versehen ist.

Die Kombination von Vorwärts-Wandler und Flyback-Konverter ermöglicht eine unabhängige Steuerung der beiden Sekundärseiten. Während die übertragene Leistung des Flyback-Konverter stark von dem Einschaltverhältnis des Schalters S1 abhängt, kann durch entsprechende Auslegung des Vorwärts-Wandlers (v.a. Selektion des Kernes des Transformators) über einen weiten Bereich von Einschaltverhältnissen eine konstante Leistung übertragen werden. Somit ergibt sich die Möglichkeit, dass die wiederaufladbare Batterie 13 gemäß ihrer Ladekurve nachgeladen wird, während die LED(s) 14 gleichmäßig betrieben wird/werden (somit wird gleiche Helligkeit erreicht).

Sofern die Einstellung der Helligkeit der LED wichtig ist und die Nachladung der wiederaufladbaren Batterie 13 nur zweitrangig ist, kann auch die Zuordnung von Vorwärts-Wandler und Flyback-Konverter getauscht werden.

Auch bei dem Ausführungsbeispiel nach Fig. 8 kann die Steuereinheit C1 auf der Primärseite angeordnet sein (d.h. bzgl. der Primärseite galvanisch nicht entkoppelt sein) und die Ansteuerung des Schalters S2 durch eine galvanische Trennung erfolgen. Die Regelung der beiden Leistungswandlerstufen P1 und P2 kann durch Erfassung von Rückführungssignalen auf der Primärseite erfolgen, beispielsweise durch Erfassung der Spannung über dem Schalter S1 und des Stromes durch den Schalter S1. Entsprechend der Beschreibung des Ausführungsbeispiels nach Fig. 6 kann auch in diesem Fall die Steuereinheit C1 die Regelung aufgrund primärseitig erfasster Rückführungssignale erfolgen. Im Falle eines Netzausfalles, der durch Überwachung der Eingangsspannung Uᵢₙ erfasst werden kann, wird der Schalter S2 durch die Steuereinheit C1 über eine galvanische Trennung getaktet und somit das Leuchtmittel über die Leistungswandlerstufe P2 betrieben.

In einer einfachen Ausführungsform, beispielweise ohne Notlichtfunktion, kann auf die wiederaufladbare Batterie 13 und die Ladeschaltung sowie den Buck-Boost Konverter zum Treiben der LED im Notlichtbetrieb verzichtet werden. In diesem Fall wird die Leistungswandlerstufe P2 nur durch die sekundärseitigen Elemente des Vorwärtswandlers zum Betreiben der LED gebildet. Eine Rückführung von Rückführsignalen kann über eine potentialgetrennte Übertragung auch in der Leistungswandlerstufe P2 oder an dem Leuchtmittel erfolgen und der Steuereinheit C1 zugeführt werden.

Eine typische Anwendung eines solches Konverters ist eine Notbeleuchtung mit LED, beispielsweise für sog. "EXIT"-Zeichen (Rettungsweganzeige) oder auch die Fluchtwegebeleuchtung.

Gemäss dem Ausführungsbeispiel von Figur 8 steuert also die Steuereinheit C1 potentialgetrennt eine kombinierte Wandlerstufe P1 an, die einerseits einen Energiespeicher und andererseits, parallel dazu, die Leuchtmittel versorgt. Mittels des Energiespeichers 13 kann dann eine zweite Wandlerstufe mit dem Schalter S2 (der nicht potentialgetrennt durch die Steuereinheit C1 angesteuert ist) selektiv die Leuchtmittel 14 versorgen.

## Patentansprüche

1. Betriebsgerät zum Betreiben einer Lichtquelle, insbesondere einer LED, aufweisend:
- Eine erste, mit einer Spannung U_{IN} versorgte und potentialgetrennte Leistungswandlerstufe (P1) mit einem ersten Bezugspotential (Z1),
- Eine zweite Leistungswandlerstufe (P2) mit einem zweiten Bezugspotential (Z2), die mit der Sekundärseite der ersten potentialgetrennten Leistungswandlerstufe (P1) verbunden ist,
- Eine vorzugsweise digitale Steuereinheit (C1), die über eine Potentialtrennungseinheit (G2) einen Leistungsschalter (S1) der ersten Leistungswandlerstufe (P1) ansteuert und die zweite Leistungswandlerstufe (P2) ohne Potentialtrennung , ansteuert,
indem die Steuereinheit (C1) einen Leistungsschalter (S2) des Betriebsgeräts ansteuert, der die zweite Leistungswandlerstufe (P2) taktet, und
- Ein Leuchtmittel (L), das von der zweiten Leistungswandlerstufe (P2) mit Energie versorgt wird.

2. Betriebsgerät nach einem der vorhergehenden Ansprüche,
bei dem die Potentialtrennungseinheit (G2) in die Steuereinheit (C1) bspw. mittels integrierter Luftspule integriert ist oder als externer Transformator ausgebildet ist.

3. Betriebsgerät zum Betreiben einer Lichtquelle, insbesondere einer LED, aufweisend:
- Eine erste mit einer Spannung U_{IN} versorgte und potentialgetrennte Leistungswandlerstufe (P1) mit einem ersten Bezugspotential (Z1),
- Eine zweite Leistungswandlerstufe (P2) mit einem zweiten Bezugspotential (Z2), die mit der Sekundärseite der ersten Leistungswandlerstufe (P1) verbunden ist,
- eine digitale Steuereinheit (C1), die ohne Potentialtrennung einen Schalter (S1) der ersten Leistungswandlerstufe (P1) ansteuert und über eine Potentialtrennungseinheit (G2) die zweite Leistungswandlerstufe (P2) ansteuert, indem sie einen Leistungsschalter (S2) des Betriebsgeräts ansteuert, der die zweite Leistungswandlerstufe (P2) taktet,
- und
- Ein Leuchtmittel (L), das von der zweiten Leistungswandlerstufe (P2) mit Energie versorgt wird.

4. Betriebsgerät nach einem der vorhergehenden Ansprüche, bei dem die Potentialtrennungseinheit (G2)in die Steuereinheit (C1) bspw. mittels integrierter Luftspule integriert ist oder als externer Transformator ausgebildet ist.

5. Notlichtbeleuchtung,
aufweisend ein Betriebsgerät nach einem der vorhergehenden Ansprüche.

## Claims

1. An operating device for operating a light source, in particular an LED, comprising:
- A first power converter stage (P1) supplied with a voltage U_{IN} and potential-isolated, having a first reference potential (Z1),
- A second power converter stage (P2) with a second reference potential (Z2), which is connected to the secondary side of the first potential-isolated power converter stage (P1),
- A preferably digital control unit (C1), which via a potential isolation unit (G2) controls a power switch (S1) of the first
power converter stage (P1) and controls the second power converter stage (P2) without potential isolation,
by the control unit (C1) controlling a power switch (S2) of the control device, which clocks the second power converter stage (P2), and
- An illuminant (L), that is supplied with energy by the second power converter stage (P2).

2. The operating device according to one of the preceding claims, with which the potential isolation unit (G2) is integrated into the control unit (C1), for example, by means of an integrated air coil or is designed as an external transformer.

3. The operating device for operating a light source, in particular an LED, comprising:
- A first power converter stage (P1), supplied with a voltage U_{IN} and potential-isolated, having a first reference potential (Z1),
- A second power converter stage (P2) with a second reference potential (Z2), which is connected to the secondary side of the first power converter stage (P1),
- a digital control unit (C1), which, without potential isolation, controls a power switch (S1) of the first power converter stage (P1) and via a potential isolation unit (G2) controls the second power converter stage (P2) by controlling a power switch (S2) of the operating device that clocks the second power converter stage (P2),
- and
- an illuminant (L), which is supplied with energy by the second power converter stage (P2).

4. The operating device according to any one of the preceding claims, with which the potential isolation unit (G2) is integrated into the control unit (C1), for example, by means of an integrated air coil or is designed as an external transformer.

5. Emergency lighting,
having an operating device according to any one of the preceding claims.

## Revendications

1. Appareil de fonctionnement permettant de faire fonctionner une source lumineuse, en particulier une DEL, présentant :
- un premier étage de convertisseur de puissance (P1) à potentiel séparé et alimenté par une tension U_{IN} comportant un premier potentiel de référence (Z1),
- un second étage de convertisseur de puissance (P2) comportant un second potentiel de référence (Z2) et relié au côté secondaire du premier étage de convertisseur de puissance (P1) à potentiel séparé,
- une unité de commande (C1), de préférence numérique, qui commande un sectionneur de puissance (S1) du premier étage de convertisseur de puissance (P1) par l'intermédiaire d'une unité de séparation de potentiel (G2) et qui commande le second étage de convertisseur de puissance (P2) sans séparation de potentiel,
par le fait que l'unité de commande (C1) commande un sectionneur de puissance (S2) de l'appareil de fonctionnement qui cadence le second étage de convertisseur de puissance (P2), et
- un moyen lumineux (L) alimenté en énergie par le second étage de convertisseur de puissance (P2).

2. Appareil de fonctionnement selon l'une des revendications précédentes, dans lequel l'unité de séparation de potentiel (G2) est intégrée dans l'unité de commande (C1), par exemple au moyen d'une bobine à air intégrée, ou est conçue en tant que transformateur externe.

3. Appareil de fonctionnement permettant de faire fonctionner une source lumineuse, en particulier une DEL, présentant :
- un premier étage de convertisseur de puissance (P1) à potentiel séparé et alimenté par une tension U_{IN} comportant un premier potentiel de référence (Z1),
- un second étage de convertisseur de puissance (P2) comportant un second potentiel de référence (Z2) et relié au côté secondaire du premier étage de convertisseur de puissance (P1),
- une unité de commande (C1) numérique qui commande un sectionneur (S1) du premier étage de convertisseur de puissance (P1) sans séparation de potentiel et qui commande le second étage de convertisseur de puissance (P2) par l'intermédiaire d'une unité de séparation de potentiel (G2) en commandant un sectionneur de puissance (S2) de l'appareil de fonctionnement qui cadence le second étage de convertisseur de puissance (P2),
- et
- un moyen lumineux (L) alimenté en énergie par le second étage de convertisseur de puissance (P2).

4. Appareil de commande selon l'une des revendications précédentes, dans lequel l'unité de séparation de potentiel (G2) est intégrée dans l'unité de commande (C1), par exemple au moyen d'une bobine à air intégrée, ou est conçue en tant que transformateur externe.

5. Éclairage de secours,
présentant un appareil de fonctionnement selon l'une des revendications précédentes.
